# EUROPÄISCHE PATENTSCHRIFT

(11) **EP 2 881 716 B1**
(45) Veröffentlichungstag und Bekanntmachung des Hinweises auf die Patenterteilung: **01.01.2020**
(21) Anmeldenummer: 14195035.2
(22) Anmeldetag: 26.11.2014
(51) Int. Cl.: G01F 23/288, G01T 1/208, G01F 25/00

(54) **Radiometrische Messanordnung und Verwendung von Temperatursicherungen in einer radiometrischen Messanordnung**
Radiometric measuring assembly and use of circuit breakers for indicating the excess of a temperature limit in such a measuring assembly
Dispositif de mesure radiométrique et usage de coupe-circuits pour indiquer un excès de température limite dans un tel dispositif

(30) Priorität: 06.12.2013 DE 102013113633
(43) Veröffentlichungstag der Anmeldung: 10.06.2015
(73) Patentinhaber: VEGA Grieshaber KG, 77709 Wolfach (DE)
(72) Erfinder: Körnle, Ralf, 77736 Zell a. H. (DE); Rauer, Winfried, 77716 Fischerbach (DE); Dreher, Wolfram, 77736 Zell a. H. (DE)
(74) Vertreter: Patentanwälte Bauer Vorberg Kayser

(56) Entgegenhaltungen:
- US-A- 4 649 015
- US-A1- 2009 127 471
- US-A1- 2010 090 111

## Beschreibung

Die vorliegende Erfindung betrifft eine radiometrische Messanordnung gemäß dem Oberbegriff des Patentanspruchs 1.

Aus dem Stand der Technik sind verschiedene radiometrische Messanordnungen zur Füllstand-, Dichte- und Grenzstandmessung bekannt, wobei zur Messung eine radioaktive Strahlenquelle und eine Erfassungseinrichtung an gegenüberliegenden Seiten eines zu überwachenden Behälters angeordnet werden. Von der radioaktiven Strahlenquelle wird Gammastrahlung durch den Behälter in Richtung der Erfassungseinrichtung ausgesendet und auf ihrem Weg durch das Füllgut je nach Füllstand und Dichte des Füllgutes mehr oder weniger absorbiert. Auf Basis der von der Erfassungseinrichtung detektierten Strahlungsstärke kann dann ein Rückschluss auf den Füllstand oder die Dichte eines zwischen der Strahlenquelle und der Erfassungseinrichtung befindlichen Füllgutes gezogen werden. Ebenso ist eine Grenzstanderfassung möglich.

Radiometrische Messanordnungen sind aus US 2010/090111 A1 und US 4 649 015 A bekannt. Bekannt sind auch radiometrische Bilddetektionsgeräte mit einer Temperaturüberwachungseinrichtung aus US 2009/127471 A1.

Beispielsweise bei der Füllstandmessung ist eine von der Erfassungseinrichtung erfasste Strahlungsstärke indirekt proportional zu einem Füllstand in dem Behälter, so dass eine Füllstandmessung hoher Güte möglich ist.

Ein besonderer Vorteil der radiometrischen Füllstandmessung ist, dass die für die Messung notwendigen Komponenten, nämlich die Strahlenquelle und die Erfassungseinrichtung, außerhalb eines Behälters anordenbar sind und damit weder die Prozessbedingungen innerhalb des Behälters noch die Eigenschaften des Füllgutes Auswirkungen auf die Einsetzbarkeit dieser Messmethode haben.

Bei den aus dem Stand der Technik bekannten radiometrischen Messanordnungen ist es bekannt, dass die Erfassungseinrichtung als Szintillator mit einem nachgeschalteten Photomultiplier ausgestaltet ist. Die auf das Szintillatormaterial treffende Gammastrahlung regt dieses durch Stoßprozesse an, wobei das Szintillatormaterial unter Abgabe von Licht in seinen Ausgangszustand zurückkehrt. Durch eine Messung der Lichtmenge, die beispielsweise über einen Photomultiplier und eine nachgeschaltete Elektronik erfolgt, kann dann auf die Intensität der eintreffenden Strahlung und somit wie oben angegeben beispielsweise auf einen Füllstand innerhalb des Behälters geschlossen werden. Insbesondere organische Szintillatormaterialien, beispielsweise polymere Festkörper, sind jedoch äußerst temperaturempfindlich und dürfen daher nicht oberhalb einer bestimmten Grenztemperatur gelagert oder betrieben werden. Bei Polystyren als Szintillatormaterial liegt diese Grenztemperatur beispielsweise bei +50° C.

Aus dem Stand der Technik ist es daher bekannt, die Einhaltung dieser Grenztemperatur durch sog. Temperaturmessstreifen zu überwachen. Wird beispielsweise ein schlauchförmig ausgebildeter Szintillator mit der Länge von beispielsweise 5 m verwendet, so werden solche Temperaturmessstreifen verteilt über die Länge, beispielsweise mit einem Abstand von jeweils 50 cm, auf den Szintillator aufgebracht. Problematisch hierbei ist, dass die verwendeten Temperaturmessstreifen einem Alterungsprozess unterliegen und daher nach einer Verwendungsdauer von max. 18 Monaten ausgetauscht werden müssen. Dies bedingt einen hohen Wartungsaufwand, der als nachteilig empfunden wird, so dass ein Austausch der Temperaturteststreifen dann häufig nicht oder zumindest nicht regelmäßig durchgeführt wird.

Da die Funktionsfähigkeit des Szintillators auch maßgeblich davon abhängt, dass dieser die Grenztemperatur nicht überschritten hat, können durch eine Temperaturüberschreitung bedingte Fehlfunktionen nicht identifiziert werden und es müssen zusätzliche Überprüfungen der gesamten Messanordnung durchgeführt werden. Dies wird ebenfalls als nachteilig empfunden.

Es ist die Aufgabe der vorliegenden Erfindung eine radiometrische Messanordnung, wie sie aus dem Stand der Technik bekannt ist, derart weiterzubilden, dass der im Stand der Technik notwendige Wartungsaufwand verringert und die Messsicherheit erhöht wird.

Diese Aufgabe wird durch eine radiometrische Messanordnung mit den Merkmalen des Patentanspruchs 1 gelöst. Vorteilhafte Weiterbildungen dieser Messanordnung sind in den abhängigen Patentansprüchen wiedergegeben. Die genannte Aufgabe wird zudem durch eine Verwendung von Temperatursicherungen in einer radiometrischen Messanordnung laut Patentanspruch 12 gelöst.

Eine erfindungsgemäße radiometrische Messanordnung weist wenigstens eine Erfassungseinrichtung mit einem bevorzugt langgestreckten Szintillator, einem Photomultiplier zur Umwandlung von in dem Szintillator erzeugten Lichtblitzen in elektrische Signale und eine Messelektronik zur Verarbeitung der elektrischen Signale mit einer Temperaturüberwachungseinrichtung für den Szintillator auf, wobei die Erfassungseinrichtung wenigstens eine Unterbrechungseinrichtung als Teil der Temperaturüberwachungseinrichtung aufweist, die eine elektrische Verbindung bei Überschreiten einer vorgegebenen Grenztemperatur unterbricht. Erfindungsgemäß ist die Unterbrechungseinrichtung als wenigstens eine Temperatursicherung ausgebildet und eine Unterbrechung des Stromkreises erfolgt irreversibel.

Durch eine derartige Anordnung kann auf die im Stand der Technik verwendeten Temperaturmessstreifen verzichtet und gleichzeitig eine elektronische Überprüfung eines Überschreitens der vorgegebenen Grenztemperatur durchgeführt werden. Es kann auf diese Weise außerdem erreicht werden, dass eine visuelle Kontrolle der einzelnen Temperaturüberwachungseinrichtungen (Temperaturmessstreifen) unterbleiben und somit eine automatische Überwachung erreicht werden kann.

Temperatursicherungen sind auf dem freien Markt für verschiedene Grenztemperaturen verfügbar, so dass eine optimale Anpassung an eine für das jeweilige Szintillatormaterial geltende Grenztemperatur erfolgen kann.

Als Temperatursicherung wird vorliegend ein in einem elektrischen Stromkreis einsetzbares Bauteil verstanden, bei dem ein durch ein temperatursensitives Material geschlossener Stromkreis bei Überschreiten einer Grenztemperatur beispielsweise durch Federkraft geöffnet wird. Als temperatursensitives Material können beispielsweise Materialien mit einem bestimmten Schmelzpunkt zum Einsatz kommen. Ein wesentliches Merkmal von durch die vorliegende Erfindung verwendeten Temperatursicherungen ist, dass eine Unterbrechung des Stromkreises irreversibel erfolgt, so dass anders als beispielsweise beim Einsatz von Bimetallelementen bei einem Überschreiten der Grenztemperatur der Stromkreis durch ein nachfolgendes Unterschreiten der Grenztemperatur nicht wieder geschlossen wird. Ein solches Bauteil kann beispielsweise eine Schmelzsicherung sein.

Eine Befestigung der Temperaturüberwachungseinrichtung 10 kann beispielsweise durch Aufkleben auf den Szintillator oder Überschrumpfen mit einem Schutzschlauch erfolgen.

Eine besonders einfache Überwachung kann bevorzugt bei langgestreckten Szintillatoren, die beispielsweise eine Länge von bis zu 10 Metern, bevorzugt von 3 bis 6 Metern, aufweisen, erreicht werden, wenn die Unterbrechungseinrichtung aus einer Reihenschaltung einer Mehrzahl von Temperatursicherungen gebildet ist. Es können hierzu wenigstens zwei, bevorzugt wenigstens vier oder beispielsweise zehn Temperatursicherungen in Reihe geschaltet und über die Länge des Szintillators verteilt angeordnet werden, so dass auch ein abschnittsweises Überschreiten der Grenztemperatur detektiert werden kann. Die Detektion kann dann beispielsweise dadurch erfolgen, dass der elektrische Durchgang der Anordnung leitungsgebunden, beispielsweise mit einem Ohmmeter, geprüft wird.

Bevorzugt ist die Unterbrechungseinrichtung mit einer Übertragungseinheit gekoppelt. Durch eine an die Unterbrechungseinrichtung gekoppelte Übertragungseinheit kann erreicht werden, dass, ggfs. auch ohne eine Reihenschaltung verschiedener Elemente zu verwenden, an unterschiedlichen Positionen des Szintillators eine Temperaturüberwachung stattfinden kann. Die Übertragungseinheit kann dabei bevorzugt drahtlos ausgebildet sein, so dass auf zusätzliche Signalleitungen innerhalb oder entlang des Szintillators verzichtet werden kann.

In einer Ausgestaltungsform ist die Übertragungseinheit als Schwingkreis ausgebildet. Ein solcher Schwingkreis kann kabelgebunden oder kabellos zu einer Schwingung angeregt werden, wobei bevorzugt die Unterbrechungseinrichtung mit dem Schwingkreis derart verschaltet ist, dass der Schwingkreis abhängig davon, ob die Unterbrechungseinrichtung ausgelöst hat oder nicht, eine unterschiedliche Resonanzfrequenz aufweist, die detektiert und weiter verarbeitet werden kann.

In einer weiteren Ausgestaltungsform ist die Übertragungseinheit als eine RFID-Übertragungseinrichtung ausgebildet, wobei die Unterbrechungseinrichtung bevorzugt mit der RFID-Übertragungseinrichtung derart verschaltet ist, dass eine Sendeantenne, bevorzugt eine als Sendeantenne wirkende Spule von der RFID-Übertragungseinrichtung abgekoppelt oder kurzgeschlossen ist, wenn die Unterbrechungseinrichtung ausgelöst hat.

In einer Weiterbildung kann die Unterbrechungseinrichtung mit dem Schwingkreis derart verschaltet sein, dass der Schwingkreis bei unausgelöster Unterbrechungseinrichtung bei einer anderen Frequenz schwingt als wenn die Unterbrechungseinrichtung ausgelöst hat. Eine solche Veränderung einer Resonanzfrequenz des Schwingkreises kann beispielsweise dadurch erreicht werden, dass eine Spule des Schwingkreises, die als Induktivität wirkt, bei unausgelöster Unterbrechungseinrichtung teilweise überbrückt ist und durch ein Auslösen der Unterbrechungseinrichtung in ihrem wirksamen Wert verändert wird.

Eine weitere Möglichkeit zur Veränderung der Resonanzfrequenz eines Schwingkreises liegt beispielsweise darin, den Schwingkreis mit einer Parallelschaltung aus einem ersten Kondensator und einem zweiten Kondensator aufzubauen, wobei der zweite Kondensator bei einem Auslösen der Unterbrechungseinrichtung von der Parallelschaltung getrennt und auf diese Weise die im Schwingkreis wirkende Kapazität und damit dessen Resonanzfrequenz ebenfalls verändert wird.

Bevorzugt kann eine Mehrzahl von Temperatursicherungen über die Länge des Szintillators verteilt angeordnet sein, so dass auch ein lokales Überschreiten der Grenztemperatur erfassbar ist.

Die einzelnen Temperatursicherungen können dabei entweder jeweils einzeln oder wie bereits dargelegt in Reihe geschaltet mit einer bzw. der Übertragungseinheit verschaltet sein. Die Verwendung mehrerer separater Übertragungseinheiten hat den Vorteil, dass auf diese Weise eindeutig identifizierbar ist, an welcher Stelle der Szintillator lokal die Grenztemperatur überschritten hat und zusätzlich auf entsprechende Signalleitungen zur Verschaltung der Unterbrechungseinrichtungen verzichtet werden kann.

Bevorzugt weist die Temperaturüberwachungseinrichtung außerdem eine Abfragevorrichtung auf. Die Abfragevorrichtung kann dabei beispielsweise zum Abfragen einer RFID-Übertragungseinheit oder zum Anregen eines Schwingkreises und zum Detektieren eines Ausschwingens des Schwingkreises ausgebildet sein. Bevorzugt ist die Abfragevorrichtung dementsprechend drahtlos ausgebildet, so dass sie den oder die Schwingkreise durch Aussenden eines elektromagnetischen Signals in einer bestimmten Frequenz zu einer Schwingung anregt und dann bevorzugt eine resultierende Schwingung des Schwingkreises bzw. deren Frequenz detektiert.

Erfindungsgemäß ist außerdem die Verwendung einer Mehrzahl von Temperatursicherungen in einer radiometrischen Messanordnung mit einer Erfassungseinrichtung mit einem langgestreckten Szintillator, einem Photomultiplier zur Umwandlung von in dem Szintillator erzeugten Lichtblitzen in elektrische Signale und einer Messelektronik zur Verarbeitung der elektrischen Signale als Bestandteil einer Temperaturüberwachungseinrichtung für den Szintillator, wobei eine Unterbrechung des Stromkreises irreversibel erfolgt. Eine derartige Verwendung von Temperatursicherungen ist bislang aus dem Stand der Technik nicht bekannt und weist ebenfalls die oben im Zusammenhang mit der Messanordnung beschriebenen Vorteile auf.

Die vorliegende Erfindung wird nachfolgend unter Bezugnahme auf die beigefügten Figuren eingehend erläutert.

Es zeigen:
- Fig. 1: eine radiometrische Messanordnung,
- Fig. 2: ein vereinfachtes Blockschaltbild der Messanordnung aus Fig. 1 mit einer Temperaturüberwachungseinrichtung,
- Fig. 3: einen Teil der Temperaturüberwachungseinrichtung aus Fig. 2,
- Fig. 4a und 4b: zwei Ausführungsbeispiele einer Temperaturüberwachungseinrichtung mit einer RFID-Übertragungseinrichtung, und
- Fig. 5a und 5b: eine alternative Ausgestaltung der Temperaturüberwachungseinrichtung aus Fig. 3 mit einem Schwingkreis.

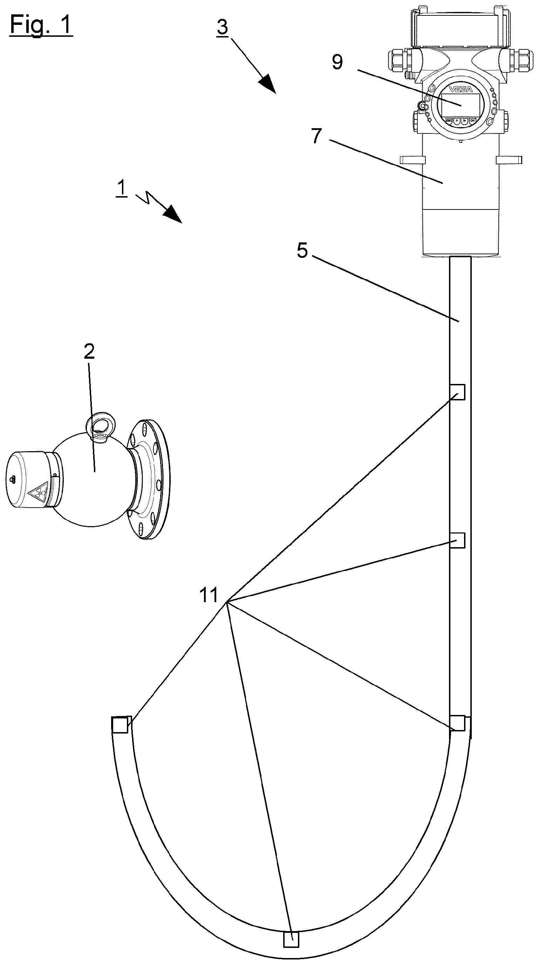

Fig. 1 zeigt eine radiometrische Messanordnung 1 gemäß der vorliegenden Anmeldung.

Die Messanordnung 1 ist im Wesentlichen aus einer Strahlenquelle 2 sowie einer Erfassungseinrichtung 3 aufgebaut, wobei ein zwischen der Strahlenquelle 2 und der Erfassungseinrichtung 3 angeordneter Behälter mit Füll- bzw. Messgut in Fig. 1 nicht dargestellt ist. Die Erfassungseinrichtung 3 ist im vorliegenden Ausführungsbeispiel aus einem langgestreckten Szintillator 5 mit einem nachgeschalteten Photomultiplier 7 und einer Messelektronik 9 aufgebaut. Der Photomultiplier 7 und die Messelektronik 9 sind in ihrem Aufbau und ihrer Ausgestaltung aus dem Stand der Technik bekannt, so dass auf diese vorliegend nicht näher eingegangen wird.

Der langgestreckte Szintillator 5 ist im vorliegenden Ausführungsbeispiel aus einem Szintillatormaterial, vorliegend Polystyren, gebildet und mit einem lichtdichten Überzug versehen. In Fig. 1 sind über die Länge des Szintillators 5 fünf Unterbrechungseinrichtungen 11 als Bestandteil einer Temperaturüberwachungseinrichtung 10, die nachfolgend erläutert wird, angeordnet. Eine derartige Verteilung der Unterbrechungseinrichtungen 11 ermöglicht eine Überwachung einer Grenztemperatur ϑ in den einzelnen Abschnitten des Szintillators 5, so dass auch lokale Überschreitungen der Grenztemperatur ϑ erfassbar sind.

Alternativ zu der in Fig. 1 dargestellten Ausgestaltung ist es außerdem möglich, die Informationen über den Zustand der Unterbrechungseinrichtung 11 auch über den Bus 60 zu übermitteln und in der Warte auszuwerten.

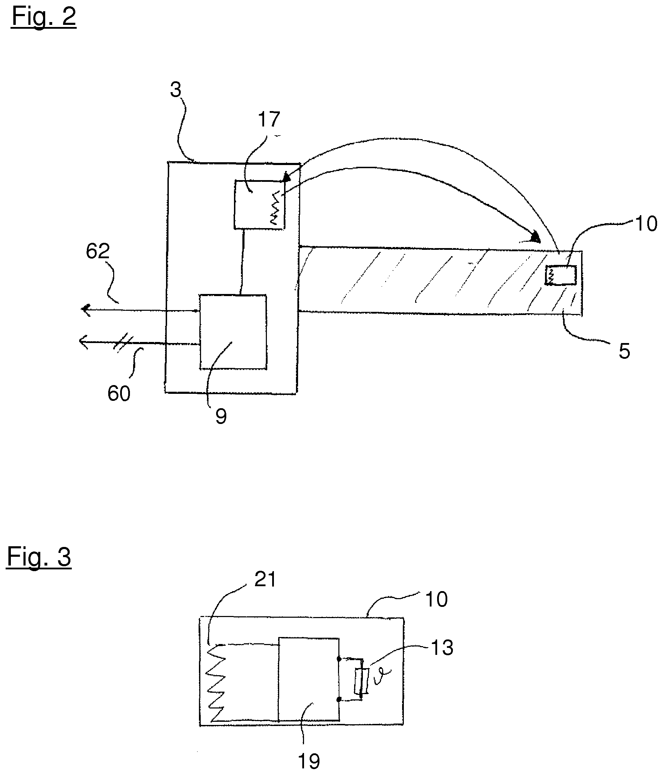

Fig. 2 zeigt ein vereinfachtes Blockschaltbild der Erfassungseinrichtung 3 aus Fig. 1.

Die Temperaturüberwachungseinrichtung 10 ist im vorliegenden Ausführungsbeispiel nur schematisch dargestellt und an dem Szintillator 5 angeordnet. Sie kommuniziert drahtlos mit einer Abfragevorrichtung 17, die mit einer Messelektronik 9 in der Erfassungseinrichtung 3 verbunden ist. Die Messelektronik 9 ist einerseits über einen Bus 60 mit einem Messstand zur Anzeige und Überwachung der ermittelten Messwerte aus der radiometrischen Messeinrichtung 1 verbunden. Zusätzlich zu dem Bus 60 ist außerdem eine Signalleitung 62 vorgesehen, mit der Warn- oder Fehlersignale an die Messwarte oder eine separate Anzeigeeinrichtung übertragen werden können.

Grundsätzlich ist es auch möglich, die radiometrische Messeinrichtung 1 mit der Strahlenquelle 2 und der Erfassungseinrichtung 3 autark, d. h. ohne Anbindung an eine Messwarte zu betreiben, wobei in großtechnischen Anwendungen in der Regel eine solche Anbindung, beispielsweise zur Zusammenführung von Messwerten verschiedener Messanordnungen, sinnvoll sein dürfte.

In Fig. 3 ist die Temperaturüberwachungseinrichtung 10 aus Fig. 2 näher dargestellt.

Im vorliegenden Ausführungsbeispiel ist die Temperaturüberwachungseinrichtung 10 mit einer RFID-Übertragungseinheit 19 sowie einer mit der RFID-Übertragungseinheit gekoppelten Antenne 21 verschaltet. Die Anordnung in Fig. 3 ist derart aufgebaut, dass ein Auslösen der Temperatursicherung 13 von der RFID-Übertragungseinheit 19 detektiert, insbesondere bei einem aktiven Abfragen durch die Abfragevorrichtung 17 detektiert wird und ein Status der Temperatursicherung 13 von der RFID-Übertragungseinheit 19 an die Abfragevorrichtung 17 zurückgemeldet wird. Auf diese Weise kann drahtlos der Status der Temperatursicherung 13 abgefragt und ein Überschreiten der Grenztemperatur ϑ erkannt werden.

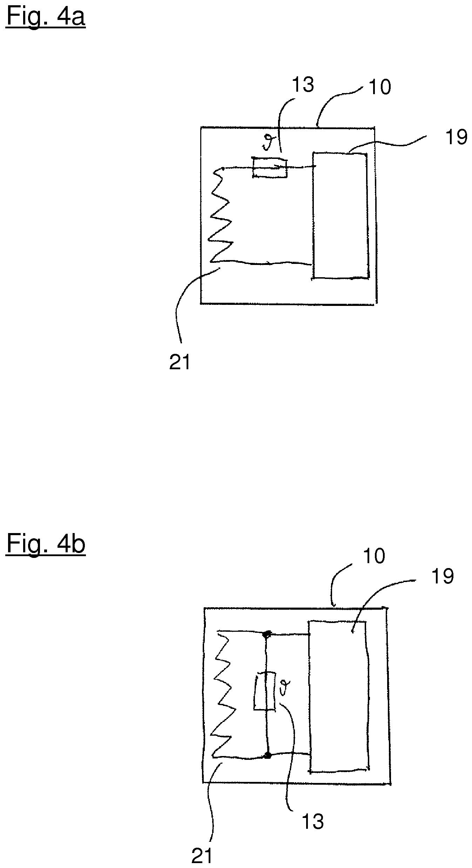

In den Fig. 4a und 4b sind zwei konkrete Verschaltungsvarianten für die Temperaturüberwachungseinrichtung 10 aus Fig. 3 wiedergegeben. Fig. 4a zeigt eine Verschaltung, bei der die Antenne 21 mit der Temperatursicherung 13 in Reihe geschaltet und mit der RFID-Übertragungseinheit 19 verbunden ist. Nach einem Auslösen der Temperatursicherung 13 ist damit die Antenne 21 von der RFID-Übertragungseinheit 19 elektrisch getrennt, so dass ein Abfrageversuch mittels der Abfragevorrichtung 17 erfolglos bleiben wird.

In Fig. 4b ist eine alternative Verschaltung angegeben, wobei die Antenne 21 und die Temperatursicherung 13 parallel geschaltet und mit der RFID-Übertragungseinheit 19 verbunden sind. Im unausgelösten Zustand der Temperatursicherung 13 ist damit die Antenne 21 kurzgeschlossen, so dass ein Abfrageversuch mittels der Abfragevorrichtung 17 erfolglos bleibt. Sobald die Temperatursicherung 13 auf Grund eines Überschreitens der Grenztemperatur ϑ ausgelöst hat und damit die elektrische Verbindung innerhalb der Temperatursicherung 13 unterbrochen ist, ist die Antenne 21 nicht mehr kurzgeschlossen oder überbrückt und ein Abfrageversuch mittels der Abfragevorrichtung 17 wird zu einer Rückmeldung der RFID-Übertragungseinheit 19 führen.

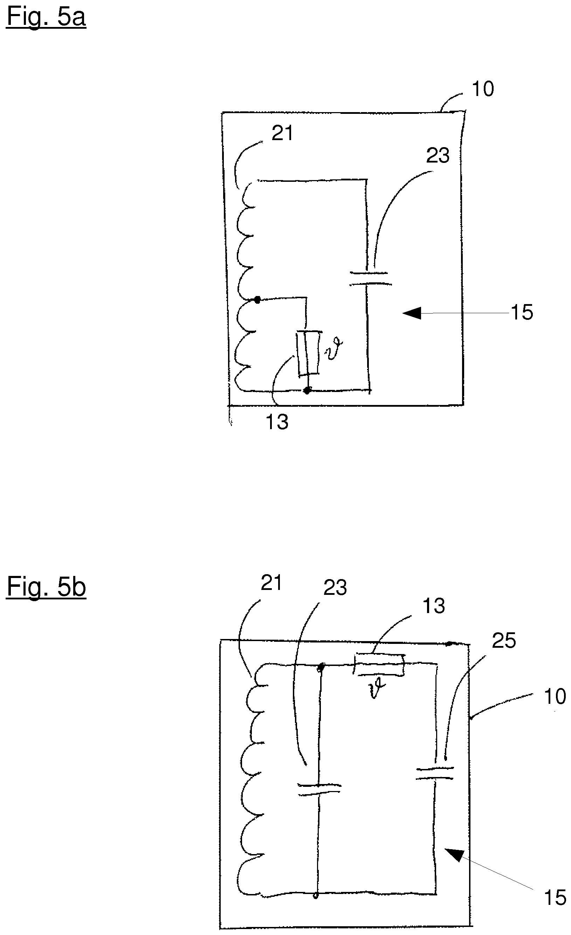

In den Fig. 5a und 5b sind Ausgestaltungen für eine Temperaturüberwachungseinrichtung 10 angegeben, wobei die Temperaturüberwachungseinrichtung 10 mit Hilfe eines Schwingkreises 15 realisiert ist.

Der in Fig. 5a wiedergegebene Schwingkreis ist in üblicher Weise mit einer als Antenne ausgebildeten Spule 21 zu einer ersten Kapazität 23 aufgebaut. Die Temperatursicherung 13 ist im vorliegenden Ausführungsbeispiel zu einem Teil der Spule 21 parallel geschaltet, so dass sich die Induktivität der Spule 21 abhängig von einem Auslösezustand der Spule 13 ändert. Konkret wird bei unsausgelöster Temperatursicherung 13 ein Teil der Spule 21 kurzgeschlossen, so dass die Induktivität der Spule 21 verringert ist. Sobald die Grenztemperatur ϑ überschritten wird und damit die Temperatursicherung 13 auslöst, wirkt der kurzgeschlossene Teil der Spule 21 ebenfalls als Induktivität, so dass sich die Resonanzfrequenz des Schwingkreises 15 entsprechend der Änderung der Induktivität verringert.

In Fig. 5b ist eine alternative Ausgestaltung gezeigt, bei der der Schwingkreis 15 aus der Spule 21 sowie einer Parallelschaltung aus dem ersten Kondensator 23 mit einer Serienschaltung aus der Temperatursicherung 13 und einem zweiten Kondensator 25 aufgebaut ist. In unausgelöstem Zustand der Temperatursicherung 13 sind damit der erste Kondensator 23 und der zweite Kondensator 25 parallel geschaltet, so dass sich deren Kapazitäten addieren. In unausgelöstem Zustand der Temperatursicherung 13 wird der Schwingkreis 15 bei einer Anregung durch die Abfragevorrichtung 17 auf einer charakteristischen Resonanzfrequenz schwingen. Sobald die Grenztemperatur ϑ der Temperatursicherung 13 einmalig überschritten wurde, löst diese aus und die Parallelschaltung aus dem ersten Kondensator 23 und dem zweiten Kondensator 25 wird aufgehoben, so dass nur noch der erste Kondensator 23 in dem Schwingkreis 15 als Kapazität wirkt. Bei einer Anregung des Schwingkreises wird diese entsprechend auf einer höheren Resonanzfrequenz ausschwingen, was wiederum durch die Abfragevorrichtung 17 detektiert werden kann.

Bei dem Ausführungsbeispiel gemäß der Fig. 5a und 5b kann die Abfragevorrichtung 17 beispielsweise als ein Sender zum Aussenden eines vorzugsweise pulsförmigen Anregungssignals ausgebildet sein, wobei die passiven Schaltungen am Szintillator 5 nach dem Aussenden des Anregungssignals mit einer vom Zustand der Temperatursicherung 13 abhängigen charakteristischen Frequenz ausschwingen. Die Abfrageeinheit kann durch Bestimmung dieser Ausschwingfrequenz auf den Zustand der Temperatursicherung 13 schließen.

Es sei an dieser Stelle darauf hingewiesen, dass in den vorbeschriebenen Ausführungsbeispielen die Temperatursicherung 13 jeweils auch durch eine Reihenschaltung aus mehreren Temperatursicherungen gebildet sein kann. Die vorgeschriebene Funktionsweise der einzelnen Verschaltungsvarianten ändert sich dadurch nicht.

Eine Überprüfung der Temperaturüberwachungseinrichtung 10 kann manuell ausgelöst und damit jeweils einmalig oder zyklisch aktiviert erfolgen, wobei der jeweilige Zustand der Unterbrechungseinrichtung bei jedem Abfragen ermittelt und ggfs. eine Warnmeldung ausgegeben wird.

### Bezugszeichenliste

- 1: radiometrische Messanordnung
- 2: Strahlenquelle
- 3: Erfassungseinrichtung

- 5: Szintillator

- 7: Photomultiplier

- 9: Messelektronik
- 10: Temperaturüberwachungseinrichtungen
- 11: Unterbrechungseinrichtung

- 13: Temperatursicherung
- 14: Übertragungseinheit
- 15: Schwingkreis

- 17: Abfragevorrichtung

- 19: RFID-Chip / Übertragungseinheit

- 21: Antenne / Spule

- 23: erster Kondensator

- 25: zweiter Kondensator

- 60: Bus

- 62: Signalleitung

- ϑ: Grenztemperatur

## Patentansprüche

1. Radiometrische Messanordnung (1) mit einer Erfassungseinrichtung (3) mit einem Szintillator (5), einem Photomultiplier (7) zur Umwandlung von in dem Szintillator erzeugten Lichtblitzen in elektrische Signale und einer Messelektronik (9) zur Verarbeitung der elektrischen Signale mit einer Temperaturüberwachungseinrichtung (10) für den Szintillator (5), wobei die Erfassungseinrichtung (3) wenigstens eine Unterbrechungseinrichtung (11) als Teil der Temperaturüberwachungseinrichtung (10) aufweist, die eine elektrische Verbindung bei Überschreiten einer vorgegebenen Grenztemperatur (ϑ) unterbricht,
**dadurch gekennzeichnet, dass**
die Unterbrechungseinrichtung (11) als wenigstens eine in einem elektrischen Stromkreis eingesetzte Temperatursicherung (13) ausgebildet ist und eine Unterbrechung des Stromkreises irreversibel erfolgt.

2. Messanordnung (1) nach Anspruch 1,
**dadurch gekennzeichnet, dass**
die Unterbrechungseinrichtung (11) wenigstens eine Reihenschaltung von wenigstens zwei, bevorzugt wenigstens vier, weiter bevorzugt wenigstens zehn Temperatursicherungen (13) aufweist.

3. Messanordnung (1) nach einem der vorhergehenden Ansprüche,
**dadurch gekennzeichnet, dass**
die Unterbrechungseinrichtung (11) mit einer Übertragungseinheit (19) gekoppelt ist.

4. Messanordnung (1) nach Anspruch 3,
**dadurch gekennzeichnet, dass**
die Übertragungseinheit (19) als Schwingkreis (15) ausgebildet ist.

5. Messanordnung (1) nach Anspruch 3,
**dadurch gekennzeichnet, dass**
die Übertragungseinheit (19) als eine RFID-Übertragungseinheit (19) ausgebildet ist.

6. Messanordnung (1) nach Anspruch 5,
**dadurch gekennzeichnet, dass**
die Unterbrechungseinrichtung (11) mit der RFID-Übertragungseinrichtung (19) derart verschaltet ist, dass eine als Sendeantenne wirkende Spule (21) abgekoppelt ist, wenn die Unterbrechungseinrichtung (11) ausgelöst hat.

7. Messanordnung (1) nach Anspruch 4,
**dadurch gekennzeichnet, dass**
die Unterbrechungseinrichtung (11) mit dem Schwingkreis (15)derart verschaltet ist, dass der Schwingkreis (15) bei unausgelöster Unterbrechungseinrichtung (11) bei einer anderen Frequenz schwingt, als wenn die Unterbrechungseinrichtung (11) ausgelöst hat.

8. Messanordnung (1) nach einem der Ansprüche 1 bis 7,
**dadurch gekennzeichnet, dass**
eine Mehrzahl von Temperatursicherungen (13) über die Länge des Szintillators (5) verteilt angeordnet sind.

9. Messanordnung (1) nach einem der Ansprüche 3 bis 8,
**dadurch gekennzeichnet, dass** wenigstens eine Abfragevorrichtung (17) zum Abfragen des Zustands der Temperatursicherung (13) vorhanden ist.

10. Messanordnung (1) nach Anspruch 9, soweit abhängig von Anspruch 4 oder 7,
**dadurch gekennzeichnet, dass** die Abfragevorrichtung (17) geeignet ausgebildet ist, den oder die Schwingkreise (15) zu einer Schwingung anzuregen und/oder eine Schwingung eines Schwingkreises (15) zu detektieren.

11. Messanordnung (1) nach Anspruch 9, soweit abhängig von Anspruch 4 oder 7,
**dadurch gekennzeichnet, dass**
die Abfragevorrichtung (17) den oder die Schwingkreise (15) drahtlos zu einer Schwingung anregt und/oder eine Schwingung eines Schwingkreises (15) drahtlos detektiert.

12. Verwendung einer Mehrzahl von Temperatursicherungen (13) in einer radiometrischen Messanordnung (1) mit einer Erfassungseinrichtung (3) mit einem langgestreckten Szintillator (5), einem Photomultiplier (7) zur Umwandlung von in dem Szintillator (5) erzeugten Lichtblitzen in elektrische Signale und einer Messelektronik (9) zur Verarbeitung der elektrischen Signale als Bestandteil einer Temperaturüberwachungseinrichtung (10) für den Szintillator (5), wobei die Temperatursicherungen (13) in einem elektrischen Stromkreis eingesetzt sind, so dass sie bei Überschreiten einer vorgegebenen Grenztemperatur (ϑ) eine elektrische Verbindung so unterbrechen, dass die Unterbrechung des Stromkreises irreversibel erfolgt.

## Claims

1. A radiometric measuring assembly (1) comprising a detecting device (3) with a scintillator (5), a photomultiplier (7) for converting flashes of light generated in the scintillator into electric signals, and an electronic measuring unit (9) for processing the electric signals with a temperature monitoring device (10) for the scintillator (5), wherein the detecting device (3) has, as a part of the temperature monitoring device (10), at least one interrupting device (11) which interrupts an electric connection when a predetermined threshold temperature (θ) is exceeded,
**characterized in that**
the interrupting device (11) is configured as at least one thermal fuse (13) incorporated into an electric circuit, and the circuit is interrupted irreversibly.

2. The measuring assembly (1) according to claim 1,
**characterized in that**
the interrupting device (11) comprises at least one series connection of at least two, preferably at least four, more preferably at least ten thermal fuses (13).

3. The measuring assembly (1) according to any one of the preceding claims,
**characterized in that**
the interrupting device (11) is coupled to a transmission unit (19).

4. The measuring assembly (1) according to claim 3,
**characterized in that**
the transmission unit (19) is configured as an oscillating circuit (15).

5. The measuring assembly (1) according to claim 3,
**characterized in that**
the transmission unit (19) is configured as an RFID transmission unit (19).

6. The measuring assembly (1) according to claim 5,
**characterized in that**
the interrupting device (11) is connected to the RFID transmission device (19) in such a way that a coil (21) acting as a transmitting antenna is decoupled when the interrupting device (11) has tripped.

7. The measuring assembly (1) according to claim 4,
**characterized in that**
the interrupting device (11) is connected to the oscillating circuit (15) in such a way that the oscillating circuit (15), when the interrupting device (11) has not tripped, oscillates at a different frequency than when the interrupting device (11) has tripped.

8. The measuring assembly (1) according to any one of the claims 1 to 7,
**characterized in that**
a plurality of thermal fuses (13) are arranged so as to be distributed over the length of the scintillator (5).

9. The measuring assembly (1) according to any one of the claims 3 to 8,
**characterized in that**
at least one querying device (17) for querying the state of the thermal fuse (13) is provided.

10. The measuring assembly (1) according to claim 9, as dependent on claim 4 or 7,
**characterized in that**
the querying device (17) is suitably configured to excite the oscillating circuit or circuits (15) to oscillate and/or to detect an oscillation of an oscillating circuit (15).

11. The measuring assembly (1) according to claim 9, as dependent on claim 4 or 7,
**characterized in that**
the querying device (17) wirelessly excites the oscillating circuit or circuits (15) to oscillate and/or wirelessly detects an oscillation of an oscillating circuit (15).

12. Use of a plurality of thermal fuses (13) in a radiometric measuring assembly (1) comprising a detecting device (3) with an elongated scintillator (5), a photomultiplier (7) for converting flashes of light generated in the scintillator (5) into electric signals, and an electronic measuring unit (9) for processing the electric signals as a part of a temperature monitoring device (10) for the scintillator (5), wherein the thermal fuses (13) are incorporated into an electric circuit so that, when a predetermined threshold temperature (θ) is exceeded, they interrupt an electric connection in such a way that the circuit is interrupted irreversibly.

## Revendications

1. Système de mesure radiométrique (1) avec un dispositif de saisie (3) avec un scintillateur (5), un photomultiplicateur (7) pour convertir des éclairs de lumière produits dans le scintillateur en signaux électriques et un système électronique de mesure (9) pour traiter les signaux électriques avec un dispositif de contrôle de température (10) pour le scintillateur (5), sachant que le dispositif de saisie (3) comporte au moins un dispositif d'interruption (11) en tant que partie du dispositif de contrôle de température (10), qui interrompt une liaison électrique lors du dépassement d'une température limite prédéfinie (ϑ), **caractérisé en ce que** le dispositif d'interruption (11) est constitué comme au moins un fusible thermique (13) inséré dans un circuit de courant électrique et une interruption du circuit de courant a lieu de façon irréversible.

2. Système de mesure (1) selon la revendication 1, **caractérisé en ce que** le dispositif d'interruption (11) comporte au moins un montage en série dont au moins deux, de préférence au moins quatre, de préférence encore au moins dix fusibles thermiques (13).

3. Système de mesure (1) selon l'une quelconque des revendications précédentes, **caractérisé en ce que** le dispositif d'interruption (11) est couplé à une unité de transmission (19).

4. Système de mesure (1) selon la revendication 3, **caractérisé en ce que** l'unité de transmission (19) est constituée comme un circuit oscillant (15).

5. Système de mesure (1) selon la revendication 3, **caractérisé en ce que** l'unité de transmission (19) est constituée comme une unité de transmission (19) à identification par radiofréquence (IRF).

6. Système de mesure (1) selon la revendication 5, **caractérisé en ce que** le dispositif d'interruption (11) est connecté au dispositif de transmission IRF de telle manière qu'une bobine (21) agissant comme antenne d'émission est découplée (19), si le dispositif d'interruption (11) s'est déclenché.

7. Système de mesure (1) selon la revendication 4, **caractérisé en ce que** le dispositif d'interruption (11) est connecté au circuit oscillant (15) de telle manière que le circuit oscillant (15) oscille lorsque le dispositif d'interruption (11) n'est pas déclenché à une autre fréquence que celle qui a déclenché le dispositif d'interruption (11).

8. Système de mesure (1) selon l'une quelconque des revendications 1 à 7, **caractérisé en ce qu'**une pluralité de fusibles thermiques (13) sont disposés répartis sur la longueur du scintillateur (5).

9. Système de mesure (1) selon l'une quelconque des revendications 3 à 8, **caractérisé en ce qu'**au moins un dispositif d'interrogation (17) est présent pour interroger l'état du fusible thermique (13).

10. Système de mesure (1) selon la revendication 9, dans la mesure où elle est dépendante de la revendication 4 ou 7, **caractérisé en ce que** le dispositif d'interrogation (17) est constitué de façon appropriée pour activer le ou les circuits oscillants (15) en une oscillation et/ou détecter une oscillation d'un circuit oscillant (15).

11. Système de mesure (1) selon la revendication 9, dans la mesure où elle est dépendante de la revendication 4 ou 7, **caractérisé en ce que** le dispositif d'interrogation (17) active le ou les circuits oscillants (15) sans fil en une oscillation et/ou détecte sans fil une oscillation d'un circuit oscillant (15).

12. Utilisation d'une pluralité de fusibles thermiques (13) dans un système de mesure radiométrique (1) avec un dispositif de saisie (3) avec un scintillateur allongé, un photomultiplicateur (7) pour convertir des éclairs de lumière produits dans le scintillateur (5) en signaux électriques et un système électronique de mesure (9) pour traiter les signaux électriques en tant que composant d'un dispositif de contrôle de température (10) pour le scintillateur (5), sachant que les fusibles thermiques (13) sont insérés dans un circuit de courant électrique de telle manière qu'ils interrompent une liaison électrique lors du dépassement d'une température limite prédéfinie (ϑ) de telle manière que l'interruption du circuit de courant a lieu de façon irréversible.
